**Europäisches Patentamt**

**European Patent Office**

**Office européen des brevets**

(19)

(11) Numéro de publication: **0 205 376**
**B1**

(12) **FASCICULE DE BREVET EUROPEEN**

(51) Int. Cl.⁴: **B 25 J 17/02**

(45) Date de publication du fascicule du brevet:
**18.01.89**

(21) Numéro de dépôt: **86401163.0**

(22) Date de dépôt: **02.06.86**

(54) Tête articulée pour robot industriel et robot équipé d'une telle tête.

(30) Priorité: **10.06.85 FR 8508712**

(43) Date de publication de la demande:
**17.12.86 Bulletin 86/51**

(45) Mention de la délivrance du brevet:
**18.01.89 Bulletin 89/3**

(84) Etats contractants désignés:
**BE CH DE GB IT LI LU NL SE**

(56) Documents cités:
**EP-A- 0 128 544**
**EP-A- 0 133 499**
**EP-A- 0 148 054**
**DE-A- 3 325 973**
**FR-A- 2 536 690**
**US-A- 3 971 266**

(73) Titulaire: **Barland, Michel, 32, Allées Paulmy,**
**F-64100 Bayonne (FR)**

(72) Inventeur: **Barland, Michel, 32, Allées Paulmy,**
**F-64100 Bayonne (FR)**

(74) Mandataire: **Levy, David et al, c/o S.A.**
**Fedit-Loriot 38, avenue Hoche, F-75008 Paris (FR)**

ACTORUM AG

## Description

La présente invention concerne une tête articulée pour les appareils de positionnement et d'orientation automatiques d'un outil, capables d'effecteur des opérations industrielles telles que soudage, usinage, peinture, ces appareils étant couramment désignés sous le terme de «robots industriels».

La «tête articulée» ou «poignet de robot» est l'ensemble articulé qui est monté à l'extrémité du bras du robot et qui assure l'orientation dans l'espace de l'outil qu'il porte.

L'invention concerne plus particulièrement les têtes articulées du type dit «à trois axes de rotation» qui comprennent trois bâtis mobiles $B_1$, $B_2$, $B_3$ montés à la suite les uns des autres suivant un axe longitudinal XX, le premier bâti $B_1$ étant porté par l'extrémité libre du bras du robot et étant rotatif autour d'un premier axe $A_1$ par rapport à ce bras; le deuxième bâti $B_2$ étant porté par le premier bâti $B_1$ et rotatif autour d'un deuxième axe $A_2$ par rapport au premier bâti; et le troisième bâti $B_3$ étant porté par le deuxième bâti $B_2$ et rotatif autour d'un troisième axe $A_3$ par rapport au deuxième bâti; ledit troisième bâti supportant un outil positionné et orienté par le robot; le premier axe $A_1$ et le troisième axe $A_3$ étant des axes longitudinaux qui sont confondus avec l'axe longitudinal XX, dans la position droite de la tête articulée; et le deuxième axe $A_2$ étant un axe intermédiaire transversal qui est toujours perpendiculaire au plan contenant les axes $A_1$ et $A_3$.

On connaît déjà des têtes articulées à trois axes de rotation de ce type, par exemple d'après le brevet français No. 2 503 012 ou d'après le brevet EP-No. 00 74 882. Pour actionner ces têtes articulées suivant leurs trois axes, il est prévu trois moteurs hydrauliques (ou trois moto-réducteurs électriques) dont au moins deux sont logés dans le bâtis mobiles de la tête articulée.

Ceci conduit à un poids élevé des parties mobiles ce qui entraîne des inerties nuisibles aux mouvements rapides et à la précision de la tête articulée.

On connaît également une tête articulée à trois axes de rotation de ce type, d'après le brevet français No. 2 310 842, dans laquelle les trois moteurs rotatifs hydrauliques, qui commandent respectivement chacun des axes de la tête, sont montés dans un boîtier de commande porté par le bras du robot, mais la transmission de mouvement entre les moteurs et l'axe de rotation qu'ils commandent nécessite des chaînes cinématiques très complexes coûteuses et génératrices de jeux.

La présente invention a pour but de remédier aux inconvénients des têtes articulées connues en évitant de monter des organes lourds, tels que des moteurs, dans les parties mobiles; en réduisant le nombre des moteurs nécessaires; et en simplifiant les transmissions entre les moteurs et les organes qu'ils actionnent.

L'invention a pour objet une tête articulée du type précité caractérisée en ce que la rotation du bâti $B_2$ autour de l'axe de rotation $A_2$ est commandée par un premier organe moteur et en ce que les rotations du bâti $B_1$ autour de l'axe $A_1$ et du bâti $B_3$ autour de l'axe $A_3$ sont commandées à la fois par un deuxième organe moteur commun unique, le premier et le deuxième organes moteurs étant portés par le bras du robot.

Grâce à l'invention, on peut obtenir les mouvements de la tête suivant ses trois axes de rotation au moyen de deux moteurs seulement qui sont situés dans la partie fixe du poignet liée au bras du robot. Du fait même de la suppression d'un des moteurs, les mécanismes de transmission sont simplifiés.

Suivant l'invention, une première chaîne cinématique à pignons coniques est interposée entre le deuxième organe moteur et les bâti $B_1$, $B_3$, cette chaîne cinématique étant telle que, sous l'effet d'une rotation quelconque du deuxième organe moteur, les bâtis $B_1$, $B_3$ pivotent respectivement, autour des axes $A_1$ et $A_2$, d'angles $\alpha_1$ et $\alpha_3$ qui sont toujours proportionnels et de même sens, et, de préférence, toujours égaux.

Dans une tête articulé suivant l'invention, une deuxième chaîne cinématique à pignons coniques est interposée entre le premier organe moteur et le bâti $B_2$ pour faire pivoter ce dernier par rapport au bâti $B_1$ autour de l'axe $A_2$.

La tête articulée suivant l'invention présente l'avantage de ne posséder aucun «point singulier» sur la surface (portion de sphère) que peut balayer l'outil qu'elle porte, un «point singulier» pouvant être défini comme une orientation de l'outil à partir de laquelle cette orientation ne peut pas être modifiée, dans un plan donné, avec une vitesse non nulle. L'existence d'un point singulier empêche de passer d'une orientation à une orientation voisine par un déplacement continu, ce qui oblige à des reprises d'outils.

L'invention sera mieux comprise à la lecture de la description détaillée qui va suivre et à l'examen des dessins annexés qui représentent, à titre d'exemples non limitatifs plusieurs modes de réalisation de l'invention.

La figure 1 est une représentation schématique d'une tête articulée à trois axes de rotation du type connu auquel s'applique l'invention.

La figure 2 montre les moyens d'entraînement et les chaînes cinématiques d'un mode de réalisation d'une tête articulée suivant l'invention.

La figure 3 est une vue schématique partielle d'une autre forme de réalisation de l'invention.

La figure 4 montre un exemple d'application de l'invention.

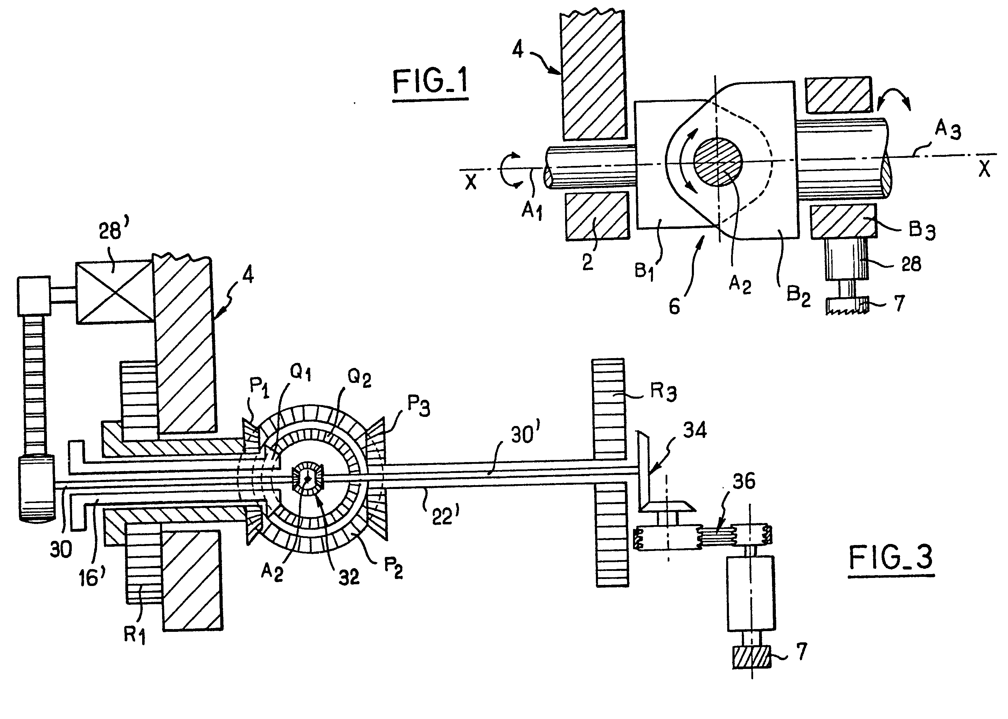

On a représenté sur la figure 1 l'extrémité 2 du bras 4 d'un robot. Ce bras 4 peut généralement être déplacé suivant trois axes, par exemple trois axes rectangulaires, par un système connu qui ne fait pas partie de l'invention. La tête articulée 6 est portée par les bras 4. Elle comprend trois bâtis mobiles $B_1$, $B_2$, $B_3$ montés à la suite les uns des autres, suivant un axe longitudinal XX. Le bâti $B_1$ peut tourner par rapport au bras 4 autour d'un axe $A_1$; le bâti $B_2$ est articulé sur le bâti $B_1$ par rapport auquel il peut pivoter autour d'un axe $A_2$; le bâti $B_3$ est porté par le bâti $B_2$ par rapport auquel il peut tourner autour d'un axe $A_3$; l'outil à orienter par la tête articulée, par exemple un outil d'usinage 7, est porté par le bâti rotatif $B_3$.

En position droite de la tête articulée, les axes de

rotation $A_1$ et $A_3$ sont des axes longitudinaux confondus avec l'axe longitudinal XX de la tête articulée, tandis que l'axe $A_2$ est un axe intermédiare transversal qui est toujours perpendiculaire au plan contenant les axes $A_1$ et $A_3$.

Des têtes articulées à trois axes de rotation, avec la disposition relative des axes qui vient d'être décrite, sont déjà connues et c'est à ce type de tête articulée que s'applique l'invention.

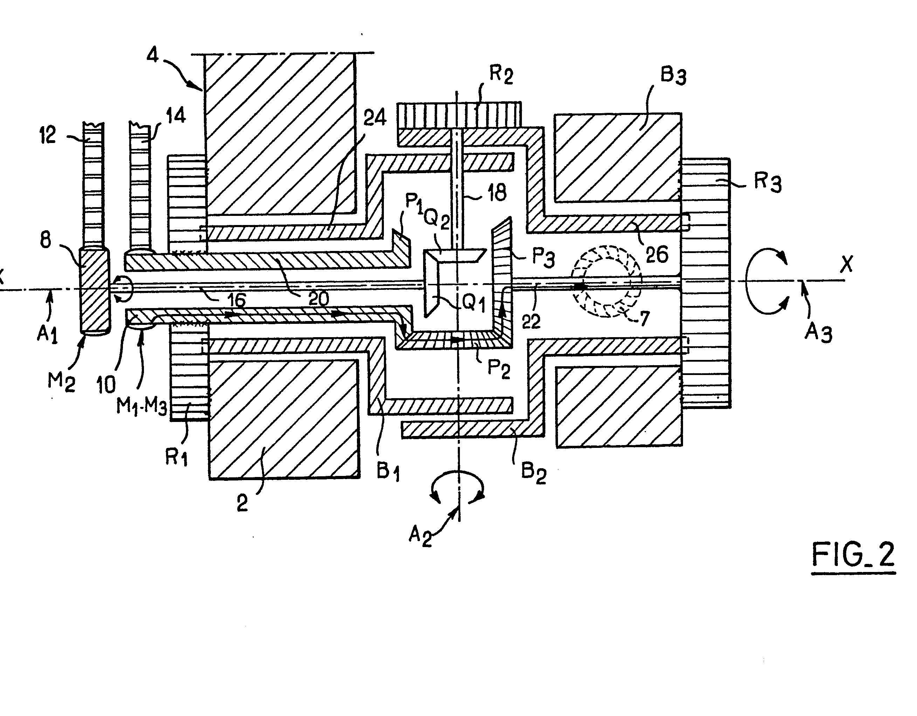

On retrouve sur la figure 2 les éléments essentiels, bâtis $B_1$, $B_2$, $B_3$ et axes $A_1$, $A_2$, $A_3$, représentés sur la figure 1.

Sur la partie fixe de la tête articulée, c'est-à-dire sur l'extrémité 2 du bras 4 du robot, sont montés coaxialement un premier organe moteur $M_2$ et un deuxième organe moteur $M_1$, $M_3$. Ces deux organes moteurs peuvent être constitués, comme représenté sur la figure 2, par deux poulies crantées 8, 10 entraînées par des courroies 12, 14, elles-mêmes entraînées par deux moteurs (non représentés) portés par le bras 4.

Ces deux organes moteurs pourraient bien entendu être constitués, en variante, par deux moteurs montés directement suivant l'axe longitudinal XX, sur le bras 4.

Une chaîne cinématique 16, $Q_1$, $Q_2$, 18 qui sera décrite plus en détail dans ce qui suit, relie le premier organe moteur $M_2$ au bâti $B_2$ de façon à faire pivoter le bâti $B_2$ par rapport au bâti $B_1$, autour de l'axe de rotation $A_2$, lorsque le premier organe moteur $M_2$ est commandé en rotation.

Une autre chaîne cinématique, qui comprend essentiellement: un arbre d'entrée creux 20; trois pignons coniques $P_1$, $P_2$, $P_3$; et un arbre de sortie 22; relie le deuxième organe moteur $M_1$, $M_3$ à la fois au bâti $B_1$, pour le faire pivoter autour de l'axe $A_1$, et au bâti $B_3$, pour le faire pivoter autour de l'axe $A_3$.

Cette chaîne cinématique, qui sera décrite plus en détail dans ce qui suit, est agencée de façon telle qu'une rotation quelconque de l'organe moteur $M_1$, $M_3$ fait pivoter les bâtis $B_1$ et $B_3$, respectivement autour des axes $A_1$ et $A_3$, d'angles $\alpha_1$ et $\alpha_3$ qui sont toujours de même sens et proportionnels, de préférence toujours égaux.

On voit donc qu'on peut commander l'orientation de la tête articulée, suivant ses trois axes de rotation, avec seulement deux organes moteurs, lesquels, au surplus, sont supportés par une partie fixe et non pas par les bâtis mobiles de la tête.

La chaîne cinématique 16, $Q_1$, $Q_2$ 18 (qui sera désignée dans ce qui suit sous le terme de deuxième chaîne cinématique) est de construction simple et ne comporte que peu d'éléments: l'arbre d'entrée 16 calé sur l'organe moteur $M_2$ et coaxial à l'axe $A_1$, le pignon conique $Q_1$, le pignon conique $Q_2$ et l'arbre de sortie 18 coaxial à l'axe $A_2$.

Dans une forme simple de réalisation de l'invention l'arbre de sortie 18 pourrait être simplement calé sur le bâti $B_2$. Mais dans ce cas on devrait utiliser, comme organe moteur, un moteur lent à fort couple ou bien un réducteur entre l'organe moteur $M_2$ et l'arbre d'entrée.

Suivant une forme préférée de réalisation, représentée sur la figure 2, on monte un réducteur $R_2$ entre l'arbre de sortie 18 (ou le pignon de sortie $Q_2$)

et le bâti $B_2$. Grâce à cette disposition, on minimise dans le rapport de la démultiplication, les jeux dans le couple de pignons coniques $Q_1$, $Q_2$.

On peut utiliser avantageusement un réducteur coaxial épicycloïdal, mais on choisit de préférence un réducteur du type connu dit «Harmonic Drive», le rapport de réduction pouvant être par exemple de 100/1.

Grâce à cette disposition de la deuxième chaîne cinématique et grâce au fait qu'elle ne comporte que deux pignons en engrènement, on peut obtenir un jeu mécanique total minimal entre l'organe moteur $M_2$ et l'organe entraîné, c'est-à-dire le bâti $B_2$.

L'autre chaîne cinématique 20, $P_1$, $P_2$, $P_3$, 22, ou première chaîne cinématique, comprend seulement trois pignons coniques: $P_1$ sur l'axe $A_1$, $P_2$ sur l'axe $A_2$ et $P_3$ sur l'axe $A_3$. Malgré ce petit nombre de pignons, il est avantageux également, pour minimiser les jeux d'engrènement, de prévoir deux réducteurs $R_1$ et $R_3$ dans la chaîne cinématique de façon que l'arbre creux 20, les pignons $P_1$, $P_2$, $P_3$ et l'arbre de sortie 22 tournent à grande vitesse, c'est-à-dire à la vitesse de l'organe moteur $M_1$, $M_3$. Là encore, on choisit de préférence des réducteurs du type «Harmonic Drive» ayant par exemple un rapport de réduction 100/1.

Le premier réducteur $R_1$ est porté par l'extrémité du bras 4 du robot, ce qui permet de ne pas augmenter l'inertie des parties mobiles de la tête articulée. L'élément central d'entrée à grande vitesse du réducteur peut être calé sur l'arbre creux 20 (entraîné à la vitesse de la poulie 10), la couronne fixe du réducteur peut être solidaire du bras 4, tandis que l'organe de sortie à vitesse lente est calé sur la partie tubulaire 24 du bâti $B_1$ qui tourillonne, suivant l'axe $A_1$, dans l'extrémité 2 du bras 4.

De même, pour le réducteur $R_3$, son élément central d'entrée à grande vitesse est calé sur l'arbre de sortie 22 de la chaîne cinématique, tandis que la couronne fixe et l'organe de sortie à vitesse lente sont solidaires respectivement de la partie tubulaire 26 du bâti $B_2$ (autour de laquelle tourne le bâti $B_3$) et du bâti $B_3$ portant l'outil 7.

Avec les rapports de réduction 100/1 indiqués ci-dessus, lorsque la poulie 10 (ou organe moteur équivalent $M_1$, $M_3$) tourne d'un tour, dans un sens ou dans l'autre, les réducteurs $R_1$ et $R_3$ tournent respectivement d'angles $\alpha_1$ et $\alpha_3$ égaux à 1/100ème de tour, tous les deux dans le même sens, si bien que le mouvement de pivotement résultant du bâti $B_3$ est de 2/100ème de tour autour de l'axe $A_3$.

De même, lorsque le poulie 8 (ou organe moteur équivalent $M_2$) tourne d'un tour, le réducteur $R_2$ fait 1/100ème de tour (en supposant que $Q_1$ et $Q_2$ sont dans le rapport 1/1), c'est-à-dire que le bâti $B_2$ pivote d'1/100ème de tour autour de l'axe $A_2$.

Les mouvements relatifs des pignons $P_1$, $P_2$, $P_3$ et $Q_1$, $Q_2$ lors d'une rotation autour de l'axe $A_2$ ou d'une rotation autour des axes $A_1$, $A_3$ peuvent être corrigés par un programme de correction introduit dans un calculateur de pilotage des moteurs $M_2$ et $M_1$, $M_3$.

Sur la figure 1, on a représenté l'outil d'usinage 7 comme ayant son axe de rotation perpendiculaire à l'axe $A_3$, mais son orientation peut être choisie sensiblement différente. Cet outil peut être entraîné directement, ou par courroies, à partir d'un moteur d'outil 28 porté par le bâti $B_3$ de la tête articulée.

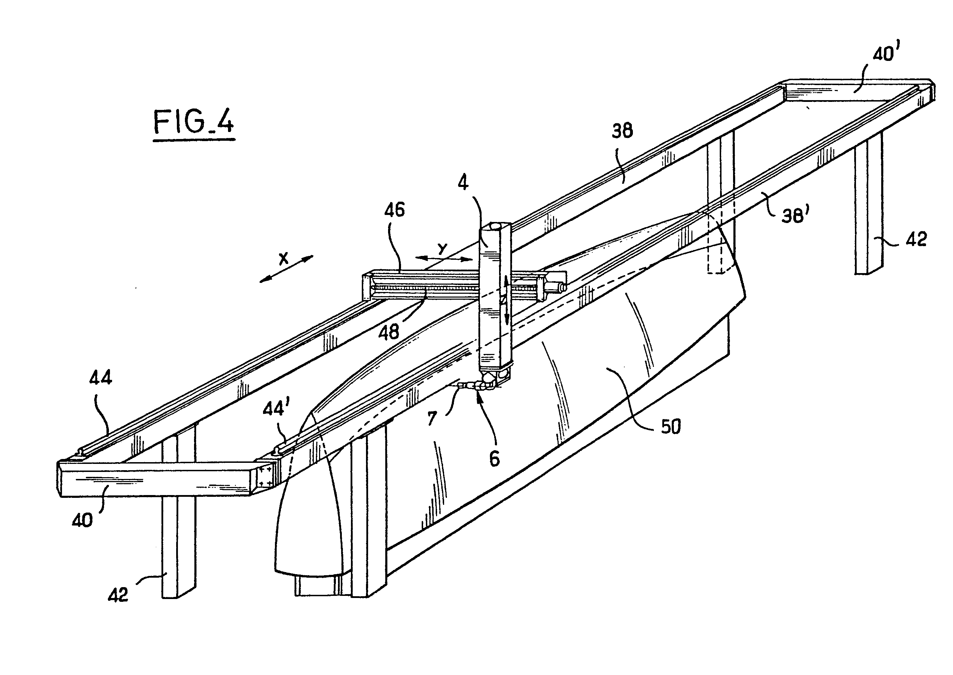

Cependant, comme il est représenté schématiquement sur la figure 3, le moteur de broche 28' peut être reporté sur la partie fixe 4, pour ne pas alourdir les parties mobiles de la tête articulée. Dans ce cas, un arbre intérieur 30, 30', pourvu d'un accouplement à trois pignons coniques 32 formant une articulation suivant l'axe $A_2$, attaque une transmission à pignons et courroies 34, 36 pour entraîner l'outil 7 porté par le bâti $B_3$. Bien entendu, les arbres 16, 22 du mode de réalisation de la figure 2 sont remplacés par des arbres creux 16', 22'.

Grâce à la simplification des chaînes cinématiques dans une tête articulée suivant l'invention, la précision de l'orientation de l'outil peut être très bonne. En effet, la première chaîne cinématique ne comporte que deux engrènements ($P_1$ avec $P_2$; $P_2$ avec $P_3$) et la deuxième chaîne cinématique un seul engrènement ($Q_1$ avec $Q_2$). On évite donc les accumulations de jeux successifs qu'on rencontre dans des transmissions plus compliquées, ces jeux étant au surplus réduits dans le rapport de démuliplication des réducteurs. Ces derniers peuvent de leur côté présenter des jeux angulaires très réduits, par exemple quelques minutes d'arc.

Enfin, l'absence de points singuliers sur la portion de sphère balayée par l'outil dans ses diverses orientations permet de réaliser certaines surfaces gauches sans reprise d'outil.

Sur les figures, les bâtis $B_1$ et $B_2$ ont été schématiquement représentés par des pièces en forme d'étrier, pour la clarté des dessins. Dans la pratique ces bâtis ont plutôt la forme de boîtiers articulés l'un à l'autre suivant l'axe $A_2$, la totalité des pignons ($P_1$, $P_2$, $P_3$, $Q_1$, $Q_2$) étant logée à l'intérieur des boîtiers.

On a représenté sur la figure 4 une application de la tête articulée 6 suivant l'invention à une machine à tailler constituant un robot industriel.

La machine comprend un châssis, comportant deux poutres longitudinales 38-38' et deux poutres transversales 40-40', fixé au sol par des pieds 42. Les poutres 38-38' portent des guidages 44-44' guidant, suivant l'axe des X, un chariot mobile 46. Ce chariot 46 porte, par l'intérmédiaire d'un système de guidage transversal 48, commandant les déplacements suivant l'axe des Y, les bras 4 à l'extrémité duquel est montée la tête articulée 6. Dans l'exemple représenté, le bras 4 est un bras vertical, mobile verticalement suivant l'axe des Z.

L'outil d'usinage 7, porté par la tête articulée 6 orientable suivant trois axes est représenté comme taillant une pièce à usiner 50, par exemple une forme pour coque de bateau.

## Revendications

1. Tête articulée pour robot industriel qui comprend trois bâtis mobiles ($B_1$, $B_2$, $B_3$) montés à la suite les uns des autres suivant un axe longitudinal (XX), le premier bâti ($B_1$) étant porté par l'extrémité libre du bras (4) du robot et étant rotatif autour d'un premier axe ($A_1$) par rapport à ce bras; le deuxième bâti ($B_2$) étant porté par le premier bâti ($B_1$) et rotatif autour d'un deuxième axe ($A_2$) par rapport au premier bâti; et le troisième bâti ($B_3$) étant porté par le deuxième bâti ($B_2$) et rotatif autour d'un troisième axe ($A_3$) par rapport au deuxième bâti; ledit troisième bâti supportant un outil (7) positionné et orienté par le robot; le premier axe ($A_1$) et le troisième axe ($A_3$) étant des axes longitudinaux qui sont confondus avec l'axe longitudinal (XX), dans la position droite de la tête articulée; et le deuxième axe ($A_2$) étant un axe intermédiaire transversal qui est toujours perpendiculaire au plan contenant les axes ($A_1$) et ($A_3$), ladite tête articulée étant caractérisée en ce que la rotation du bâti ($B_2$) autour de l'axe de rotation ($A_2$) est commandée par un premier organe moteur ($M_2$) et en ce que les rotations du bâti ($B_1$) autour de l'axe ($A_1$) et du bâti ($B_3$) autour de l'axe ($A_3$) sont commandées à la fois pàr un deuxième organe moteur commun unique ($M_{1-3}$), lesdits organes moteurs ($M_2$) et ($M_{1-3}$) étant portés par le bras (4).

2. Tête articulée suivant la revendication 1, caractérisée en ce qu'une première chaîne cinématique à pignons coniques ($P_1$, $P_2$, $P_3$) est interposée entre le deuxième organe moteur ($M_1$, $M_3$) et les bâtis ($B_1$, $B_3$), cette chaîne cinématique étant telle que, sous l'effet d'une rotation quelconque du deuxième organe moteur ($M_1$, $M_3$), les bâtis ($B_1$, $B_3$) pivotent respectivement, autour des axes ($A_1$) et ($A_3$), d'angles ($\alpha_1$) et ($\alpha_3$) qui sont toujours proportionnels et de même sens.

3. Tête articulée suivant la revendication 2, caractérisée en ce que les angles de rotation ($\alpha_1$) et ($\alpha_3$) sont toujours égaux et de même sens.

4. Tête articulée suivant l'une des revendications précédentes, caractérisée en ce qu'une deuxième chaîne cinématique à pignons coniques ($Q_1$, $Q_2$) est interposée entre le premier organe moteur ($M_2$) et le bâti ($B_2$) pour faire pivoter ce dernier par rapport au bâti ($B_1$) autour de l'axe ($A_2$).

5. Tête articulée suivant la revendication 4, caractérisée en ce que la première et la deuxième chaînes cinématiques à pignons coniques sont entièrement contenues à l'intérieur des bâtis ($B_1$, $B_2$).

6. Tête articulée suivant la revendication 5, caractérisée en ce que: les pignons coniques ($P_2Q_2$) de la première et deuxième chaîne sont disposés coaxialement suivant l'axe ($A_2$); les pignons coniques ($P_1Q_1$) de la première et de la deuxième chaîne sont disposés coaxialement suivant l'axe ($A_1$), le pignon conique ($P_3$) de la première chaîne étant disposé suivant l'axe ($A_3$).

7. Tête articulée suivant l'une des revendications 2 à 6, caractérisée en ce qu'un premier réducteur ($R_1$) est interposé entre le deuxième organe moteur ($M_1$, $M_3$) et le bâti ($B_1$) et en ce qu'un deuxième réducteur ($R_3$) est interposé entre le trosième pignon conique ($P_3$) de la première chaîne cinématique et le bâti ($B_3$).

8. Tête articulée suivant l'une des revendications 4 à 7, caractérisée en ce qu'un troisième réducteur ($R_2$) est interposé entre le pignon de sortie ($Q_2$) de la deuxième chaîne cinématique et le bâti ($B_2$).

9. Tête articulée suivant l'une des revendications 7 ou 8, caractérisée en ce que les réducteurs ($R_1$, $R_2$,

$R_3$) sont des réducteurs épicycloïdaux ou analogues ayant leurs axes respectivement confondus avec les axes ($A_1$, $A_2$, $A_3$).

10. Tête articulée suivant l'une des revendications 7 ou 9, caractérisée en ce que le réducteur ($R_1$) est porté par le bras (4).

11. Tête articulée suivant l'une des revendications 1 à 10, caractérisée en ce que l'outil (7) porté par ladite tête est un outil rotatif d'usinage et en ce que l'axe de rotation dudit outil est orienté sensiblement perpendiculairement à l'axe ($A_3$).

12. Tête articulée suivant la revendication 11, caractérisée en ce que l'outil (7) est entraîné par un moteur (28) porté par le bâti ($B_3$).

13. Tête articulée suivant la revendication 11, caractérisée en ce que l'outil (7) est entraîné par un moteur (28') porté par le bras (4) du robot.

14. Robot industriel, caractérisé en ce qu'il est équipé de la tête articulée suivant l'une des revendications précédentes.

## Patentansprüche

1. Schwenkkopf für Industrieroboter mit drei beweglichen Gestellen ($B_1$, $B_2$, $B_3$), die aufeinanderfolgend entlang einer Längsachse (XX) angebracht sind, wobei das erste Gestell ($B_1$) durch das freie Ende des Arms (4) des Roboters getragen und um eine erste Achse ($A_1$) mit Bezug auf diesen Arm drehbar ist; wobei das zweite Gestell ($B_2$) durch das erste Gestell ($B_1$) getragen und um eine zweite Achse ($A_2$) mit Bezug auf das erste Gestell drehbar ist; wobei das dritte Gestell ($B_3$) durch das zweite Gestell ($B_2$) getragen und um eine dritte Achse ($A_3$) mit Bezug auf das zweite Gestell drehbar ist; wobei das dritte Gestell ein Werkzeug (7) trägt, welches durch den Roboter positioniert und ausgerichtet wird; wobei die erste Achse ($A_1$) und die dritte Achse ($A_3$) Längsachsen sind, die mit der Längsachse (XX) in der rechten Position des Schwenkkopfes zusammenfallen; und wobei die zweite Achse ($A_2$) eine querverlaufende Zwischenachse ist, die stets lotrecht zu der die Achsen ($A_1$) und ($A_3$) enthaltende Ebene steht, wobei der Schwenkkopf dadurch gekennzeichnet ist, dass die Drehung des Gestells ($B_2$) um die Drehachse ($A_2$) durch einen ersten Antriebsmotor ($M_2$) gesteuert ist, und dass die Drehungen des Gestells ($B_1$) um die Achse ($A_1$) und des Gestells ($B_3$) um die Achse ($A_3$) gleichzeitig gesteuert sind durch einen zweiten gemeinsamen, einzigen Antriebsmotor ($M_{1-3}$), wobei die Antriebsmotore ($M_2$) und ($M_{1-3}$) durch den Arm (4) getragen sind.

2. Schwenkkopf nach Anspruch 1, dadurch gekennzeichnet, dass eine erste Antriebskegelrad-Getriebekette ($P_1$, $P_2$, $P_3$) zwischen den zweiten Antriebsmotor ($M_1$, $M_3$) und die Gestelle ($B_1$, $B_3$) eingeschaltet ist, wobei die Getriebekette derart ausgelegt ist, dass die Gestelle ($B_1$, $B_3$) unter der Einwirkung irgend einer Drehung des zweiten Antriebsmotors ($M_1$, $M_3$) jeweils um die Achsen ($A_1$) und ($A_3$) um Winkel ($\alpha_1$) und ($\alpha_3$) schwenken, die stets proportional und gleichgerichtet sind.

3. Schwenkkopf nach Anspruch 2, dadurch gekennzeichnet, dass die Drehwinkel ($\alpha_1$) und ($\alpha_3$) stets gleich und gleichgerichtet sind.

4. Schwenkkopf nach einem der vorangegangenen Ansprüche, dadurch gekennzeichnet, dass eine zweite Antriebskegelrad-Getriebekette ($Q_1$, $Q_2$) zwischen den ersten Antriebsmotor ($M_2$) und das Gestell ($B_2$) eingeschaltet ist, um letzteres mit Bezug auf das Gestell ($B_1$) um die Achse ($A_2$) zu schwenken.

5. Schwenkkopf nach Anspruch 4, dadurch gekennzeichnet, dass die erste und die zweite Antriebskegelrad-Getriebekette vollständig in dem Innern der Gestellle ($B_1$, $B_2$) enthalten sind.

6. Schwenkkopf nach Anspruch 5, dadurch gekennzeichnet, dass die Antriebskegelräder ($P_2Q_2$) der ersten und zweiten Kette koaxial zu der Achse ($A_2$) angeordnet sind, und dass die Antriebskegelräder ($P_1Q_1$) der ersten und der zweiten Kette koaxial zu der Achse ($A_1$) angeordnet sind, wobei das Antriebskegelrad ($P_3$) der ersten Kette entlang der Achse ($A_3$) angeordnet ist.

7. Schwenkkopf nach einem der Ansprüche 2 bis 6, dadurch gekennzeichnet, dass ein erstes Rädervorgelege ($R_1$) zwischen dem zweiten Antriebsmotor ($M_1$, $M_3$) und dem Gestell ($B_1$) eingeschaltet ist, und dass ein zweites Rädervorgelege ($R_3$) zwischen dem dritten Antriebskegelrad ($P_3$) der ersten Getriebekette und dem Gestell ($B_3$) eingeschaltet ist.

8. Schwenkkopf nach einem der Ansprüche 4 bis 7, dadurch gekennzeichnet, dass ein drittes Rädervorgelege ($R_2$) zwischen dem End-Antriebskegelrad ($Q_2$) der zweiten Getriebekette und dem Gestell ($B_2$) eingeschaltet ist.

9. Schwenkkopf nach einem der Ansprüche 7 oder 8, dadurch gekennzeichnet, dass die Rädervorgelege ($R_1$, $R_2$, $R_3$) epyzkloide oder analoge Rädervorgelege sind, deren Achsen jeweils mit den Achsen ($A_1$, $A_2$, $A_3$) zusammenfallen.

10. Schwenkkopf nach einem der Ansprüche 7 oder 9, dadurch gekennzeichnet, dass das Rädervorgelege ($R_1$) durch den Arm (4) getragen ist.

11. Schwenkkopf nach einem der Ansprüche 1 bis 10, dadurch gekennzeichnet, dass das von dem Kopf getragene Werkzeug (7) ein Bearbeitungsdrehwerkzeug ist, und dass die Drehachse dieses Werkzeugs im wesentlichen lotrecht zu der Achse ($A_3$) ausgerichtet ist.

12. Schwenkkopf nach Anspruch 11, dadurch gekennzeichnet, dass das Werkzeug (7) durch einen von dem Gestell ($B_3$) getragenen Motor (28) angetrieben ist.

13. Schwenkkopf nach Anspruch 11, dadurch gekennzeichnet, dass das Werkzeug (7) durch einen von dem Arm (4) des Roboters getragenen Motor (28') angetrieben ist.

14. Industrieroboter, dadurch gekennzeichnet, dass er mit dem Schwenkkopf gemäss einem der vorangehenden Ansprüche ausgestattet ist.

## Claims

1. An articulated head for an industrial robot comprising three movable frames ($B_1$, $B_2$, $B_3$) mounted in succession along a longitudinal axis (XX), the first frame ($B_1$) being carried by the free end of the robot arm (4) and being rotatable about a first axis ($A_1$)

with respect to said arm, the second frame ($B_2$) being carried by the first frame ($B_1$) and rotatable about a second axis ($A_2$) with respect to said first frame and the third frame ($B_3$) being carried by the second frame ($B_2$) and rotatable about a third axis ($A_3$) with respect to the second frame, the function of said third frame being to support a tool (7) which is positioned and oriented by the robot, the first axis ($A_1$) and the third axis ($A_3$) being longitudinal axes which coincide with the longitudinal axis (XX) in the straight position of the articulated head and the second axis ($A_2$) being an intermediate transverse axis which is always perpendicular to the plane containing the first ($A_1$) and third ($A_3$) axes, said articulated head being characterized in that the rotational displacement of the second frame ($B_2$) about the second axis of rotation ($A_2$) is controlled by a first driving element ($M_2$) and in that the movements of rotation of the first frame ($B_1$) about the first axis ($A_1$) and of the third frame ($B_3$) about the third axis ($A_3$) are both controlled by a single common second driving element ($M_{1-3}$) said driving elements ($M_2$ and $M_{1-3}$) being carried by the robot arm (4).

2. An articulated head according to claim 1, characterized in that a first kinematic chain comprising bevel-pinions ($P_1$, $P_2$, $P_3$) is interposed between the second driving element ($M_1$, $M_3$) and the first ($B_1$) and third ($B_3$) frames, said kinematic chain being so designed that, under the action of any movement of rotation of said second driving element ($M_1$, $M_3$), the first ($B_1$) and third ($B_3$) frames undergo a pivotal displacement respectively about the first ($A_1$) and third ($A_3$) axes through angles ($\alpha_1$) and ($\alpha_3$) which are always proportional and always have the same direction.

3. An articulated head according to claim 2, characterized in that the angles of rotation ($\alpha_1$) and $\alpha_3$) are always equal and always have the same direction.

4. An articulated head according to one of the preceding claims, wherein a second kinematic chain comprising bevel-pinions ($Q_1$, $Q_2$) is interposed between the first driving element ($M_2$) and the second frame ($B_2$) in order to rotate said second frame with respect to the first frame ($B_1$) about the second axis ($A_2$).

5. An articulated head according to claim 4, characterized in that the first and second kinematic chains comprising bevel-pinions are entirely contained within the first ($B_1$) and second ($B_2$) frames.

6. An articulated head according to claim 5, wherein the bevel-pinions ($P_2Q_2$) of the first and second kinematic chain are placed coaxially along the second axis ($A_2$), the bevel-pinions ($P_1Q_1$) of the first and second kinematic chain are placed coaxially along the first axis ($A_1$), the third bevel-pinion ($P_3$) of the first kinematic chain being placed along the third axis ($A_3$).

7. An articulated head according to one of claims 2 to 6, characterized in that a first speed-reducer ($R_1$) is interposed between the second driving element ($M_1$, $M_3$) and the first frame ($B_1$) and in that a second speed-reducer ($R_3$) is interposed between the third bevel-pinion ($P_3$) of the first kinematic chain and the third frame ($B_3$).

8. An articulated head according to one of claims 4 to 7, characterized in that a third speed-reducer ($R_2$) is interposed between the output pinion ($Q_2$) of the second kinematic chain and the second frame ($B_2$).

9. An articulated head according to claim 7 or 8, characterized in that the speed-reducers ($R_1$, $R_2$, $R_3$) are epicyclic reduction gears or the like having axes which coincide respectively with the first ($A_1$), second ($A_2$) and third ($A_3$) axes of rotation.

10. An articulated head according to claim 7 or 9, characterized in that the speed-reducer ($R_1$) is carried by the robot arm (4).

11. An articulated head according to one of claims 1 to 10, characterized in that the tool (7) carried by said head is a rotary machining tool and wherein the axis of rotation of said tool is oriented substantially at right angles to the third axis of rotation ($A_3$).

12. An articulated head according to claim 11, wherein the tool (7) is driven by a motor (28) carried by the third frame ($B_3$).

13. An articulated head according to claim 11, characterized in that the tool (7) is driven by a motor (28') carried by the robot arm (4).

14. An industrial robot, characterized in that said robot is equipped with an articulated head according to one of claims 1 to 13.

FIG_1

FIG_3

FIG_2

EP 0 205 376 B1

FIG.4

EP 0 205 376 B1